# EUROPEAN PATENT APPLICATION

(11) **EP 4 632 899 A1**
(43) Date of publication of application: **15.10.2025**
(21) Application number: 24169459.5
(22) Date of filing: 10.04.2024
(51) Int. Cl.: H01M 50/209, H01M 50/242, H01M 50/244, H01M 50/224, H01M 50/249

(54) **BATTERY SYSTEM WITH IMPROVED END PLATE**

(71) Applicant: Samsung SDI Co., Ltd., Yongin-si, Gyeonggi-do 17084 (KR)
(72) Inventor: Bloder, Martin, 8261 Sinabelkirchen (AT)
(74) Representative: Gulde & Partner

(57) **Abstract**

The present disclosure refers to a battery system (100) including a plurality of battery cells (12) arranged along a stacking axis (A) to form a cell stack (10), and a cell stack frame (20) accommodating the cell stack (10), wherein the cell stack frame (20) includes a displaceable end plate (22) including a plate element (222, 222') facing the cell stack (10), the plate element (222, 222') being mounted on opposite sides thereof to side walls (24, 25) of the cell stack frame (20) via mounting elements (224, 224') of the displaceable end plate (22), wherein each mounting element (224, 224') is connected to the plate element (222, 222') via at least two deformable arms (226, 226') allowing a displacement of the plate element (222, 222') along the stacking axis (A), and wherein the plate element (222, 222'), under a deformation of the deformable arms (226, 226'), exerts a pressure onto the cell stack (10).

## Description

### Field of the Disclosure

The present disclosure relates to a battery system with an improved end plate. Further, the present invention relates to a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The battery cells of a battery pack may be arranged to form a cell stack by stacking the battery cells onto each other or arranging the battery cells in a row. Neighboring battery cells of a cell stack may be distanced from one another via cell spacers. The cell stack may be placed inside a cell stack frame delimiting the battery cells to the outside. To ensure optimal operation of the battery cells over their lifetime, it is important that a predefined pressure is exerted onto the battery cells by the cell stack frame to compensate for possible production tolerances and swelling of the battery cells.

Current battery systems typically include cell stack frames with end plates exerting pressure onto the cell stack with a rigid linear or progressive elastic pressure characteristic. A disadvantage of such rigid frameworks may be the susceptibility to length or positioning deviations because a small displacement may cause a steep increase or decrease of force applied on the cell stack, which in turn may reduce the stacks performance. To mitigate this, very precise and therefore expensive production tolerances have to be met, or other costly and intricate ways of adjusting the cell stacks pre-tension via positioning of the end plate during assembly have to be implemented. Such end plates may not be able to ensure that the right amount of pressure is applied to the cell stack over its entire lifetime.

It may thus be an object of the present application to provide a battery system with an improved cell stack frame ensuring the right pressure conditions for optimal operation of the battery cells over their entire lifetime.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system includes a plurality of battery cells arranged along a stacking axis to form a cell stack, and a cell stack frame accommodating the cell stack, wherein the cell stack frame includes a displaceable end plate including a plate element facing the cell stack, the plate element being mounted on opposite sides thereof to side walls of the cell stack frame via mounting elements of the displaceable end plate, wherein each mounting element is connected to the plate element via at least two deformable arms allowing a displacement of the plate element along the stacking axis, and wherein the plate element, under a deformation of the deformable arms, exerts a pressure onto the cell stack.

According to another aspect of the present disclosure, each of the deformable arms includes two or more arm elements, wherein neighboring arm elements are separated from one another by a slit.

According to another aspect of the present disclosure, for each mounting element, the deformable arms protrude from the mounting element at opposite sides of the mounting element.

According to another aspect of the present disclosure, the displaceable end plate includes two or more plate elements arranged above each other, the plate elements facing the cell stack in a common plane.

According to another aspect of the present disclosure, between each of neighboring plate elements a bent connector element is arranged that interconnects the neighboring plate elements, the bent connector element being bent backwards away from the cell stack on the stacking axis.

According to another aspect of the present disclosure, the displaceable end plate including the plate element, the deformable arms and the mounting elements is formed as one-piece from a sheet material.

According to another aspect of the present disclosure, the displaceable end plate is formed as one-piece from a sheet metal.

According to another aspect of the present disclosure, each mounting element is connected to the plate element via connecting portions having a thickness at least equal to or thicker than the thickness of the deformable arms.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to an embodiment, the battery system including a displaceable end plate with deformable arms.
- Fig. 2(a) to (d): each illustrates a perspective view, a front view, side view and a top view of the displaceable end plate according to an embodiment.
- Fig. 3(a) to (d): each illustrates a perspective view, a front view, side view and a top view of the displaceable end plate according to another embodiment.
- Fig. 4: illustrates three schematic top views of different embodiments of battery systems having different cell stack lengths and corresponding side views of the displaceable end plate having its deformable arms deformed to different degrees.
- Fig. 5: illustrates a diagram showing a force to elongation (displacement) ratio for the battery system.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells, for example prismatic or pouch type battery cells. The battery cells are arranged to form a cell stack, for example by stacking the battery cells onto each other or arranging the battery cells in a row along a stacking axis. Cell spacers may be disposed in-between adjacent or neighboring battery cells. Thus, neighboring battery cells of the cell stack may be distanced from one another via a cell spacer. The cell stack may form one or more battery packs.

The cell stack is disposed inside a cell stack frame. The cell stack frame includes at least one displaceable end plate. The cell stack frame may include two end plates and two side walls connecting the end plates, wherein one or both of the end plates may be displaceable end plates. The cell stack arranged inside the cell stack frame may thus be delimited from four sides by the end plates and side walls. The cell stack frame may further include a top cover and a bottom cover such that the cell stack may be delimited from all six sides. The at least one displaceable end plate is fixed to the side walls, for example riveted or screwed, via its mounting elements. The cell stack frame may delimit the cell stack to an outside, i.e. to an environment of the cell stack. The at least one displaceable end plate may form an outer delimitation of the cell stack frame. Also, the other end plate and/or the side walls may form the outer delimitation of the cell stack frame. In other words, the cell stack frame, e.g. the two end plates and two side walls, may delimit an interior space of the cell stack frame from the exterior, wherein in said interior space the cell stack is arranged. One or both of the end plates may be such displaceable end plates.

The at least one displaceable end plate includes a plate element which faces the cell stack. The plate element may therefore contact the cell stack directly or via e.g. an end spacer. The plate element is the plate-shaped part of the displaceable end plate. The plate element may be substantially rigid, i.e. non-deformable. The plate element may have a shape and size corresponding to a shape and size of the interior of the cell stack frame. The plate element, and thus the displaceable end plate, is attached to the side walls of the cell stack frame via the mounting elements. That is, the displaceable end plate includes mounting elements connected to the plate element, wherein the mounting elements are attached to the side walls, e.g. riveted or screwed. A first mounting element may be connected to a first end of the plate element next to a first side wall of the cell stack frame, and a second mounting element may be connected to a second end of the plate element next to a second side wall of the cell stack frame opposite the first side wall. The displaceable end plate may be mounted to the side walls at a pre-defined fixture/mounting position with respect to the side walls. Each of the mounting elements is connected to the plate element via two or more deformable arms. The deformable arms are deformable such that the plate element may be displaced or moved along the stacking axis of the battery cells of the cell stack.

During assembly of the battery system, the displaceable end plate is placed at the end of the cell stack frame such that the plate element is pressed against the cell stack. Thereby the deformable arms are deformed and the plate element is thus displaced. In other words, the deformable arms are tensioned thereby exerting a force/pressure onto the plate element and the plate element in turn exerts a force/pressure onto the cell stack. Thus, the displaceable end plate exerts a pressure onto the cell stack via the plate element. The plate element of the displaceable end plate is pressed against the cell stack with a pressing force, wherein the displaceable end plate is supported by the side walls of the cell stack frame via its mounting elements. In other words, the side walls of the cell stack frame may serve as a counter-bearing. In other words, the plate element is spring-loaded against the cell stack via the deformable arms.

The deformable arms are adapted to be, at lower compression forces, elastically deformed and to be, at higher compression forces, plastically deformed. In other words, the displaceable end plate may be adapted, due to its deformable arms, to deform linearly elastic in a first force range and linearly plastic in a second force range. The displaceable end plate with its plate element being supported by the deformable arms may exhibit a suitable deformation characteristic for ensuring that the pressure onto the cell stack, i.e. the compression force acting onto the cell stack, is substantially constant over the lifetime of the cell stack. Thus, in contrast to current battery systems which may exhibit a rigid linear or progressive elastic pressure characteristic, the battery system according to the disclosure has, due to the displaceable end plate, a constant deformation characteristic in the relevant force range. In other words, the displaceable end plate, may exert a constant compression force onto the cell stack in the relevant, advantageous pre-tensioning force range for prismatic or pouch type cells. Inevitable tolerances for both the elements of the cell stack as well as the elements of the cell stack frame can be compensated by the inherent deformation ability of the displaceable end plate. This may eliminate the need of additional shimming or other adjustment work during cell stacking. Further, any swelling (which may e.g. be due to ageing) of the battery cells of the cell stack may also be compensated. Also, loads which may occur during accidents may be compensated. Due to said tolerances and swelling, a length of the cell stack may vary. However, the displaceable end plate may exert substantially the same pressure onto the cell stack independent of the length of the cell stack. Thus, the cell stack may be kept in the optimum range of pressure for peak performance ensuring reliable and safe operation through all its life cycle until end of life. Due to the deformable arms, the displaceable end plate may always be mounted at the same fixture position without adjustments while keeping the pressure onto the cell stack in the desired range. Thus, in summary, the battery system is capable of compensating production tolerances as well as swelling forces/displacements of the battery cells over the lifetime of the battery system because the displaceable end plate is adapted to maintain a substantially constant pressure.

According to an embodiment, each of the deformable arms includes two or more arm elements, wherein neighboring arm elements are separated from one another by a slit. The arm elements may extend parallel to each other. The slits may be formed as through-slits, i.e. they may form openings extending through the material. For example, each of the deformable arms may include three arm elements and two slits being, the arm elements and slits being arranged alternately. Providing multiple arm elements may improve the deformability of the deformable arms and may ensure that the displaceable end plate/the deformable arms exhibit the intended deformation characteristic.

According to an embodiment, for each mounting element, the deformable arms protrude from the mounting element at opposite sides of the mounting element. The deformable arms may protrude upwards/downwards from the mounting element. The deformable arms may protrude at an angle with respect to a plane of the plate element. The deformable arms may protrude upwards/downwards from the mounting element at an angle towards the plate element. This may ensure that the displaceable end plate/the deformable arms exhibit the intended deformation characteristic.

According to an embodiment, the displaceable end plate includes two or more plate elements arranged on top of each other, the plate elements facing the cell stack in a common plane. In this embodiment, two or more plate elements may be provided, wherein each of the plate elements is supported and pressed against the cell stack by its mounting elements and deformable arms as explained. Thus, each of the two or more plate elements may be mounted on opposite sides thereof to the side walls of the cell stack frame via mounting elements of the displaceable end plate, wherein each mounting element may be connected to the respective plate element via at least two deformable arms allowing a displacement of the displaceable plate element along the stacking axis, and wherein the displaceable plate element, under a deformation of the deformable arms, exerts a pressure onto the cell stack. All the plate elements may together, in combination, exert the pressure onto the cell stack. The plate elements may form or may be part of a single plate element. Neighboring plate elements may be distanced from one another via a spacing. Providing multiple such plate elements may allow for a uniform pressure to be exerted onto the cell stack and may ensure that the displaceable end plates/the deformable arms exhibit the intended deformation characteristic.

According to an embodiment, a bent connector element is arranged between neighboring plate elements, the bent connector element interconnecting the neighboring plate elements, the bent connector element being bent backwards away from the cell stack on the stacking axis. In other words, the bent connector element is bent backwards with respect to the common plane of the plate elements. As mentioned, neighboring plate elements may be distanced from one another via a spacing. According to an embodiment, neighboring plate elements are distanced from one another by the bent connector elements. The bent connector elements may form a recess or spacing as they are bent backwards. The bent connector elements may provide stability and flexibility to the displaceable end plate and may ensure that the displaceable end plates/the deformable arms exhibit the intended deformation characteristic.

According to an embodiment, the displaceable end plate including the plate element(s), the deformable arms and the mounting elements, is formed as one-piece from a sheet material. For example, the displaceable end plate may be formed from sheet metal. In other words, the plate element(s), the deformable arms and the mounting elements may all form integral parts of the displaceable end plate. The displaceable end plate may thus be formed by processing a single sheet metal, for example by deep-drawing, bending, folding and/or cutting the sheet metal. The end plate may be formed without any connecting means such as rivets, or screws and without welding. If multiple plate elements are provided, as mentioned above, the bent connector elements in-between the plate elements may be formed from the same sheet metal as well, for example by deep-drawing/bending the sheet metal to form the bent connector elements. The sheet metal may e.g. be an aluminum sheet or a (pressed) steel sheet. The displaceable end plate being formed as one-piece from a sheet material may provide for a simple manufacturing while providing stability and flexibility to the displaceable end plate and may ensure that the displaceable end plates/the deformable arms exhibit the intended deformation characteristic.

According to an embodiment, each mounting element is connected to the plate element via connecting portions having a thickness at least equal to or thicker than the thickness of the deformable arms. Thus, the connecting portions may be more rigid than the deformable arms. This may prevent the deformable arms from being overly deformed and/or and may ensure that the displaceable end plates/the deformable arms exhibit the intended deformation characteristic.

According to an embodiment, the battery system includes two of the above-discussed displaceable end plates, one at each end of the cell stack frame. In other words, the battery system may include a first displaceable end plate at a first end of the cell stack frame and a second displaceable end plate at a second end of the cell stack frame, the second end being opposite the first end. Both the two displaceable end plates may be mounted to the side walls as explained above. That is, each of the two displaceable end plates may include a plate element facing the cell stack, the plate element being mounted on opposite sides thereof to side walls of the cell stack frame via mounting elements of the displaceable end plate, wherein each mounting element is connected to the plate element via at least two deformable arms allowing a displacement of the plate element along the stacking axis, and wherein the plate element, under a deformation of the deformable arms, exerts a pressure onto the cell stack. Providing two such displaceable end plates may ensure that the intended pressure is exerted onto the cell stack.

The disclosure also pertains to an electric vehicle including a battery system according to the disclosure, i.e. a battery system as explained above.

According to one aspect of the present disclosure, a method for assembling a battery system according to the disclosure, i.e. a battery system as explained above, may be provided. Therein, the cell stack frame may be provided without the displaceable end plate placed in its fixture/mounting position. The cell stack may then be inserted into the cell stack frame without pre-compression. Subsequently, the displaceable end plate may be placed in its fixture/mounting position thereby compressing the cell stack via the plate element(s) and under deformation of the deformable arms.

### Specific Embodiments

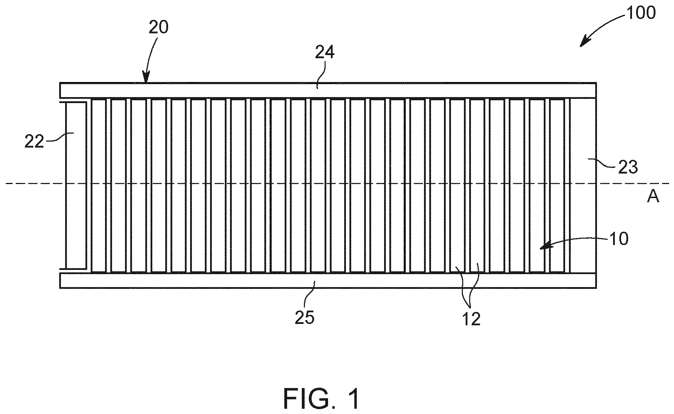

Fig. 1 illustrates a schematic top view of a battery system 100 according to an embodiment. The battery system 100 includes plurality of battery cells 12 arranged to form a cell stack 10, and a cell stack frame 20 accommodating the cell stack 10. The battery cells 12 are stacked or arranged along a stacking axis A.

The cell stack frame 20 includes two end plates 22, 23 and two side walls 24, 25 connecting the end plates 22, 23. The end plates 22, 23 and side walls 24, 25 delimit the cell stack 10 from four sides as shown in Fig. 1. The cell stack frame 20 may further include a top cover (not shown) and a bottom cover (not shown) to completely encase the cell stack 10.

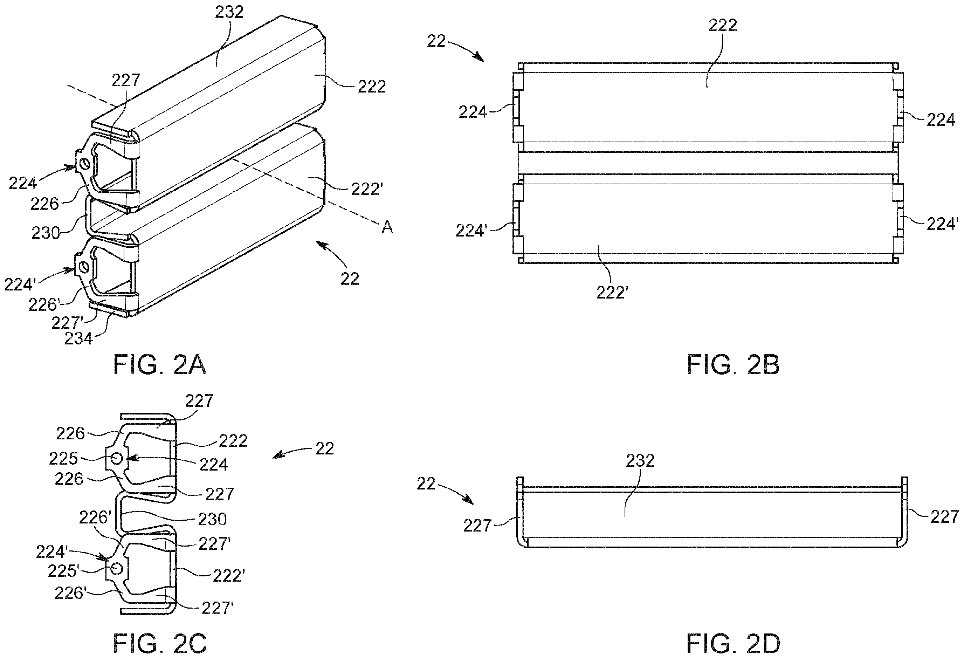

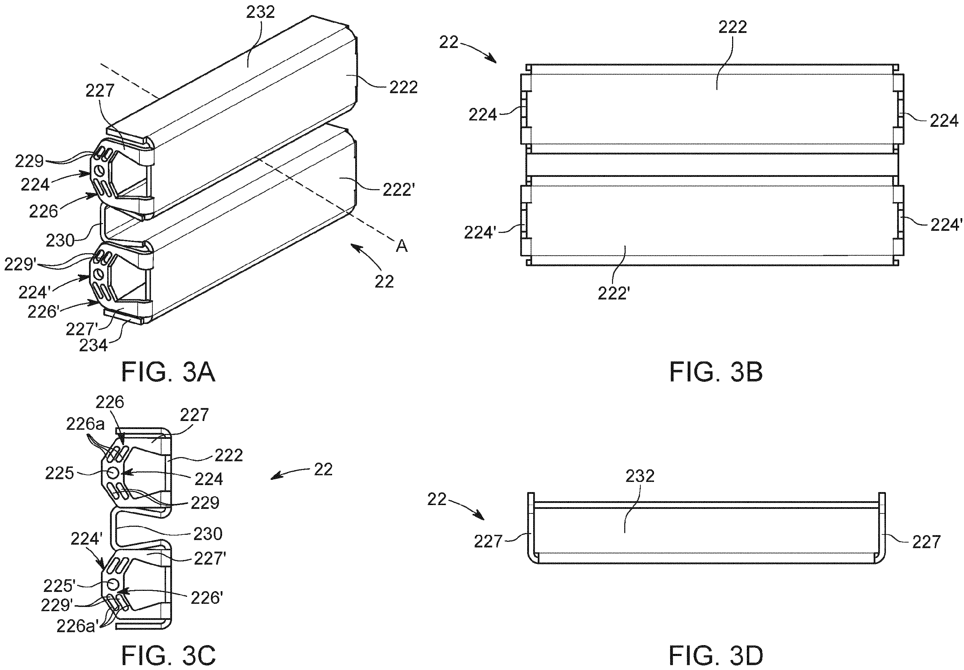

The end plate 22 is a displaceable end plate and is shown in both Fig. 2 and Fig. 3 in a front view, a top view, a left side view and a perspective (isometric) view.

The displaceable end plate 22 includes an upper plate element 222 and a lower plate element 222', the plate elements 222, 222' facing the cell stack 10 in a common plane, see Fig. 2. In other words, the plate elements 222, 222' are arranged above each other. The upper plate element 222 is mounted on opposite sides thereof to the side walls 24, 25 of the cell stack frame 20 via mounting elements 224, wherein each mounting element 224 is connected to the upper plate element 222 via two deformable arms 226 and via connecting portions 227. The deformable arms 226 may be connected to the connecting portions 227. One end of the connecting portions 227 may be connected to the plate element 222, and the other end may be connected to the deformable arms 226. The connection portions 227 may have a shape that becomes thinner from the plate element 222 side to the deformable arms 226 side, and the thinnest portion (e.g., the thickness at the deformable arm 226 side) may be at least equal to or thicker than the thickness of the deformable arm 226. Thus, the connecting portions 227 may be more rigid than the deformable arms 226. This may prevent the deformable arms 226 from being overly deformed.The deformable arms 226 each protrude from the respective mounting element 224 at opposite sides at an angle towards the upper plate element 222. The mounting elements 224 are mounted to the respective side wall 24, 25, e.g. via a bolt or screw inserted into a through-hole 225 of the respective mounting element 224.

Accordingly, the lower plate element 222' is mounted on opposite sides thereof to the side walls 24, 25 of the cell stack frame 20 via mounting elements 224', wherein each mounting element 224' is connected to the lower plate element 222' via two deformable arms 226' and via connecting portions 227'. The structure of the connecting portions 227' and its connection with deformable arms 226' may be the same or similar to the structure of connecting portions 227 and the connection between connecting portions 227 and deformable arms 226. The deformable arms 226' each protrude from the respective mounting element 224' at opposite sides at an angle towards the lower plate element 222'. The mounting elements 224' are mounted to the respective side wall 24, 25, e.g. via a bolt or screw inserted into a through-hole 225' of the respective mounting element 224'.

Between the upper plate element 222 and the lower plate element 222' a bent connector element 230 is arranged that interconnects the neighboring plate elements 222, 222'. The bent connector element 230 is bent backwards away from the cell stack 10 on the stacking axis A thereby forming a recess. Further, a plate-shaped upper end element 232 extends from the upper plate element 222 backwards, for example in about a 90 degree angle. The upper end element 232 thus extends in parallel to the stacking axis A. The upper end element 232 may abut the top cover of the cell stack frame 20. A plate-shaped lower end element 234 extends from the lower plate element 222' backwards, for example in about a 90 degree angle. The lower end element 234 thus extends in parallel to the stacking axis A. The lower end element 232 may abut the bottom cover of the cell stack frame 20.

In the embodiment of Fig. 3, each of the deformable arms 226, 226' includes three arm elements 226a, 226a', wherein neighboring arm elements 226a, 226a' are separated from one another by a slit 229, 229'. Other than that, the embodiment of the displaceable end plate 22 of Fig.3 is the same as the embodiment of the displaceable end plate 22 of Fig. 2.

The displaceable end plate 22 is formed from a sheet metal, e.g. from an aluminum sheet or a pressed steel sheet. That is, the plate elements 222, 222', the deformable arms 226, 226' (and, in case of the embodiment of Fig. 3, the arm elements 226a, 226a'), the connecting portions 227, 227', the mounting elements 224, 224' and the end elements 232, 234 are all formed as one-piece from a sheet metal. For example, a single metal sheet may be deep-drawn and/or bent to form the displaceable end plate/the mentioned elements.

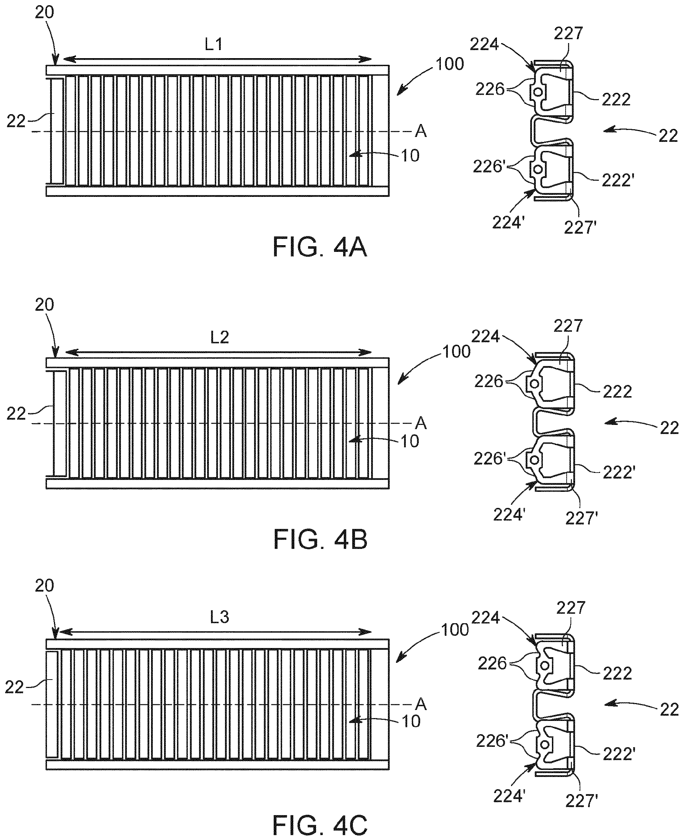

The deformable arms 226, 226' allow a displacement of the plate elements 222, 222' along the stacking axis A such that the plate elements 222, 222', under a deformation of the deformable arms 226, 226', exert a pressure onto the cell stack 10. In other words, in the assembled state of the battery system 100 as shown in Fig. 1, the displaceable end plate 22 exerts a pressure onto the cell stack 10 via its plate elements 222, 222' because the plate elements 222, 222' are pressed against the cell stack 10 via the deformable arms 226, 226'. This can be seen in Fig. 4.

Due to production tolerances of the battery cells 12 and possibly of any cell spacers (not shown) arranged in between the battery cells 12, the length of the cell stack 10 may vary. That is, it may occur during production that not all produced cell stacks have the same length. Also, the battery cells 12 of the cell stack 10 may swell due to ageing thereby expanding along the axis A and thus increasing the length of the cell stack 10. The cell stack frame 20 according to the disclosure may compensate these different lengths of the cell stack 10 because of the displaceable end plate 22 with its deformable arms 226, 226'.

As shown in Fig. 4, the deformable arms 226, 226' of the end spacer 22 are deformed to different degrees depending on the cell stack length. In Fig. 4a the cell stack 10 has a first length L1, in Fig. 4b the cell stack 10 has a second length L2, and in Fig. 4c the cell stack 10 has a third length L3, wherein the second length L2 may be a minimal length, the third length L3 a maximum length, and the first length L1 a nominal length, i.e. L3 > L1 > L2. For the cell stack 10 having the minimal length L2, the deformable arms 226, 226' are deformed only slightly, see Fig. 4b. For the cell stack 10 having the maximum length L3, the deformable arms 226, 226' are deformed heavily, see Fig. 4c. For the cell stack 10 having the nominal length L1, the deformable arms 226, 226' are deformed moderately, see Fig. 4a. Nevertheless, the displaceable end plate 22 may exert substantially the same pressure via its deformable arms 226, 226' onto the cell stack 10 independent of the length of the cell stack 10. The cell stack frame 20 with its displaceable end plate 22 may thus be suited to ensure the right pressure conditions for optimal operation of the battery cells 12 over their entire lifetime.

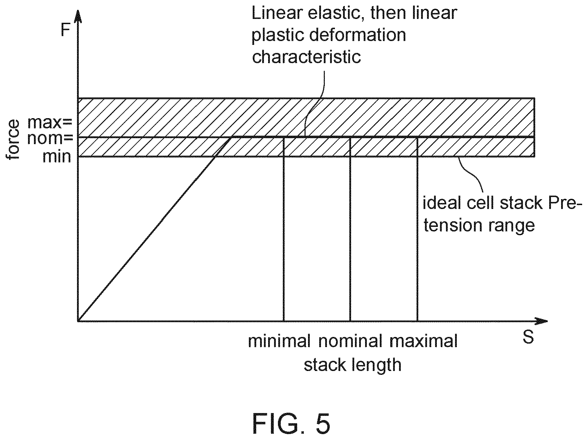

In contrast to current battery systems which may exhibit a rigid linear or progressive elastic pressure characteristic, the displaceable end plate 22 according to the disclosure has, due to the deformable arms 226, 226', at lower compression forces, an elastic deformation characteristic and, at higher compression forces, a plastic deformation characteristic. The plastic deformation characteristic has a flat force-displacement-inclination in the relevant, advantageous pre-tensioning force range for prismatic or pouch type cells as shown in Fig. 5.

Fig. 5 illustrates a diagram showing a force F to elongation (displacement) s ratio for the displaceable end plate 22 including the deformable arms 226, 226'. As shown, the exerted force F increases linearly (elastic deformation) with the elongation s (and thus stack length L) in a first section, at lower forces, and stays constant (plastic deformation) in a second section, at higher forces. The force (and thus the pressure) exerted by the displaceable end plate 22 is regulated by the deformable arms 226, 226' such that the force stays within a window or range of an ideal cell stack pre-tension for the different cell stack lengths of Fig. 4.

Thus, the displaceable end plate 22 may, due to the deformable arms 226, 226', exert a constant compression force onto the cell stack 10 and is thus capable of compensating production tolerances as well as swelling forces/displacements of the battery cells over the lifetime of the battery system. The displaceable end plate 22 is designed such that the min-max cell stack tolerances are in the flat plateau area of the force/deflection curve as shown in Fig. 5. Thus, the cell stack 10 may be kept in the optimum range of pressure for peak performance ensuring reliable and safe operation through all its life cycle until end of life.

### Reference signs

- 10: cell stack
- 12: battery cells
- 20: cell stack frame
- 22: displaceable end plate
- 23: end plate
- 24: side wall
- 25: side wall
- 100: battery system
- 222: upper plate element
- 222': lower plate element
- 224: mounting elements
- 224': mounting elements
- 225: through-holes
- 225': through-holes
- 226: deformable arms
- 226': deformable arms
- 227: connecting portions
- 227': connecting portions
- 229: slits
- 230: bent connector element
- 232: upper end element
- 234: lower end element
- A: axis

## Claims

1. A battery system (100) comprising a plurality of battery cells (12) arranged along a stacking axis (A) to form a cell stack (10), and a cell stack frame (20) accommodating the cell stack (10), wherein the cell stack frame (20) comprises a displaceable end plate (22) comprising a plate element (222, 222') facing the cell stack (10), the plate element (222, 222') mounted on opposite sides thereof to side walls (24, 25) of the cell stack frame (20) via mounting elements (224, 224') of the displaceable end plate (22), wherein each mounting element (224, 224') is connected to the plate element (222, 222') via at least two deformable arms (226, 226') allowing a displacement of the plate element (222, 222') along the stacking axis (A), and wherein the plate element (222, 222'), under a deformation of the deformable arms (226, 226'), exerts a pressure onto the cell stack (10).

2. The battery system (100) according to claim 1, wherein each of the deformable arms (226, 226') comprises two or more arm elements (226a, 226a'), wherein neighboring arm elements (226a, 226a') are separated from one another by a slit (229).

3. The battery system (100) according to any one of the preceding claims, wherein, for each mounting element (224, 224'), the deformable arms (226, 226') protrude from the mounting element (224, 224') at opposite sides of the mounting element (224, 224').

4. The battery system (100) according to any one of the preceding claims, wherein the displaceable end plate (22) comprises two or more plate elements (222, 222') arranged above each other, the plate elements (222, 222') facing the cell stack in a common plane.

5. The battery system (100) according to claim 4, wherein between each of neighboring plate elements (222, 222') a bent connector element (230) is arranged that interconnects the neighboring plate elements (222, 222'), the bent connector element (230) being bent backwards away from the cell stack (10) on the stacking axis (A).

6. The battery system (100) according to any one of the preceding claims, wherein the displaceable end plate (22) comprising the plate element (222, 222'), the deformable arms (226, 226') and the mounting elements (224, 224') is formed as one-piece from a sheet material.

7. The battery system (100) according to claim 6, wherein the displaceable end plate (22) is formed as one-piece from a sheet metal.

8. The battery system (100) according to any one of the preceding claims, wherein each mounting element (224, 224') is connected to the plate element (222, 222') via connecting portions (227,227') having a thickness at least equal to or thicker than the thickness of the deformable arms (226,226').

9. The battery system (100) according to any one of the preceding claims, comprising two displaceable end plates (22), one at each end of the cell stack frame (20).

10. An electric vehicle comprising the battery system (100) according to any one of the preceding claims.

## Amended claims

### Amended claims in accordance with Rule 137(2) EPC.

1. A battery system (100) comprising a plurality of battery cells (12) arranged along a stacking axis (A) to form a cell stack (10), and a cell stack frame (20) accommodating the cell stack (10), wherein the cell stack frame (20) comprises a displaceable end plate (22) comprising a plate element (222, 222') facing the cell stack (10), the plate element (222, 222') mounted on opposite sides thereof to side walls (24, 25) of the cell stack frame (20) via mounting elements (224, 224') of the displaceable end plate (22), wherein each mounting element (224, 224') is connected to the plate element (222, 222') via at least two deformable arms (226, 226') allowing a displacement of the plate element (222, 222') along the stacking axis (A), and wherein the plate element (222, 222'), under a deformation of the deformable arms (226, 226'), exerts a pressure onto the cell stack (10), wherein the deformable arms (226, 226') are adapted to be, at lower compression forces, elastically deformed and to be, at higher compression forces, plastically deformed.

2. The battery system (100) according to claim 1, wherein each of the deformable arms (226, 226') comprises two or more arm elements (226a, 226a'), wherein neighboring arm elements (226a, 226a') are separated from one another by a slit (229).

3. The battery system (100) according to any one of the preceding claims, wherein, for each mounting element (224, 224'), the deformable arms (226, 226') protrude from the mounting element (224, 224') at opposite sides of the mounting element (224, 224').

4. The battery system (100) according to any one of the preceding claims, wherein the displaceable end plate (22) comprises two or more plate elements (222, 222') arranged above each other, the plate elements (222, 222') facing the cell stack in a common plane, wherein between each of neighboring plate elements (222, 222') a bent connector element (230) is arranged that interconnects the neighboring plate elements (222, 222'), the bent connector element (230) being bent backwards away from the cell stack (10) on the stacking axis (A).

5. The battery system (100) according to any one of the preceding claims, wherein the displaceable end plate (22) comprising the plate element (222, 222'), the deformable arms (226, 226') and the mounting elements (224, 224') is formed as one-piece from a sheet material.

6. The battery system (100) according to claim 5, wherein the displaceable end plate (22) is formed as one-piece from a sheet metal.

7. The battery system (100) according to any one of the preceding claims, wherein each deformable arm (226,226') is connected to the plate element (222, 222') via connecting portions (227,227') having a thickness at least equal to or thicker than the thickness of the deformable arms (226,226').

8. The battery system (100) according to any one of the preceding claims, comprising two displaceable end plates (22), one at each end of the cell stack frame (20).

9. An electric vehicle comprising the battery system (100) according to any one of the preceding claims.
